# FASCICULE DE BREVET EUROPEEN

(11) **EP 3 520 203 B1**
(45) Date de publication et mention de la délivrance du brevet: **12.01.2022**
(21) Numéro de dépôt: 17787498.9
(22) Date de dépôt: 28.09.2017
(51) Int. Cl.: H02K 3/50, H02K 5/173, H02K 3/52, H02K 11/33

(54) **MACHINE ELECTRIQUE TOURNANTE MUNIE D'UN INTERCONNECTEUR A CONFIGURATION AMELIOREE**
ROTIERENDE ELEKTRISCHE MASCHINE MIT EINEM VERBINDUNGSELEMENT MIT VERBESSERTER KONFIGURATION
ROTARY ELECTRIC MACHINE PROVIDED WITH AN INTERCONNECTOR WITH IMPROVED CONFIGURATION

(30) Priorité: 28.09.2016 FR 1659168
(43) Date de publication de la demande: 07.08.2019
(73) Titulaire: Valeo Equipements Electriques Moteur, 94046 Créteil Cedex (FR)
(72) Inventeur: LEDIEU, Cédric, 94046 Créteil Cedex (FR); LABROSSE, Jean-Claude, 94046 Créteil Cedex (FR); ROUIS, Oussama, 94046 Créteil Cedex (FR)
(74) Mandataire: Valeo Powertrain Systems
(86) Numéro de dépôt international: PCT/FR2017/052645
(87) Numéro de publication internationale: WO 2018/060634

(56) Documents cités:
- EP-A2- 2 200 155
- WO-A2-2011/082879
- DE-A1-102012 023 477
- FR-A1- 2 886 477
- FR-A1- 2 950 753

## Description

La présente invention porte sur une machine électrique tournante munie d'un interconnecteur à configuration améliorée. L'invention trouve une application particulièrement avantageuse, mais non exclusive, avec les machines électriques réversibles de forte puissance pouvant fonctionner en mode alternateur et en mode moteur accouplées avec un élément hôte tel qu'un réducteur de boîte de vitesses.

De façon connue en soi, les machines électriques tournantes comportent un stator et un rotor solidaire d'un arbre. Le stator est monté dans un carter configuré pour porter à rotation l'arbre sur des paliers par l'intermédiaire de roulements.

Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un module électrique de commande.

Dans certains types de chaînes de traction de véhicule automobile assurant la transmission de la puissance mécanique du moteur thermique vers les roues du véhicule, une machine électrique tournante réversible de forte puissance est accouplée à la boîte de vitesses du véhicule. La machine électrique est alors apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique.

En général, on utilise un interconnecteur permettant d'établir une correspondance entre les sorties de phase du stator et des modules de puissance qui sont décalées angulairement par rapport aux sorties de phase. Il existe toutefois un risque de détérioration des connexions électriques entre l'interconnecteur et les sorties de phase lorsque la machine électrique est placée dans un environnement vibratoire sévère.

Le document DE102012023477A1 présente un interconnecteur permettant d'établir une connexion électrique entre des sorties de phase d'un stator et un circuit électronique.

Le document FR2886477 présente un autre interconnecteur.

Le document WO2011/082879 présente un palier de machine électrique tournante portant des conducteurs permettant d'établir une connexion électrique entre des sorties de phase d'un stator et une alimentation électrique.

La présente invention vise à remédier efficacement à cet inconvénient en proposant une machine électrique tournante selon la revendication 1, notamment pour véhicule automobile, comportant:
- un palier comportant une paroi transversale,
- un stator comportant un corps et un bobinage muni d'une pluralité d'enroulements de phase, chaque enroulement de phase comportant des extrémités,
- un module électrique de commande de la machine électrique tournante,
- un interconnecteur comportant des bornes destinées à être reliées à des extrémités des enroulements de phase et des terminaux de connexion destinés à être reliés au module électrique de commande de la machine électrique tournante,
caractérisée en ce que
- l'interconnecteur est en appui contre une face de la paroi transversale du palier dirigée vers l'intérieur de la machine électrique tournante,
- l'interconnecteur étant fixé à ladite face de la paroi transversale du palier au moyen d'organes de fixation.

L'invention permet ainsi un maintien robuste de l'interconnecteur tout en proposant un ensemble compact peu sensible aux vibrations lors du fonctionnement de la machine électrique.

Selon une réalisation, le module de commande est monté plaqué contre une face de la paroi transversale du palier tournée vers l'extérieur de la machine électrique tournante.

Selon une réalisation, les organes de fixation comportent chacun une tête disposée du côté d'une face de la paroi transversale du palier tournée vers le module électrique de commande.

Selon une réalisation, l'interconnecteur comporte des inserts taraudés destinés à recevoir les extrémités filetées des organes de fixation. Cela permet de faciliter le démontage de l'ensemble et confère une plus grande fiabilité de la machine par exemple contre les vibrations.

Selon une réalisation, les terminaux de l'interconnecteur sont vissés sur des pattes de modules de puissance appartenant au module électrique de commande.

Selon l'invention, le palier comporte des ouvertures ménagées dans sa paroi transversale pour le passage des terminaux de connexion.

Selon l'invention, les ouvertures présentent un dégagement permettant le passage d'un outil de soudage des extrémités d'enroulement sur les bornes de l'interconnecteur. Cela permet un montage aisé de la machine notamment lors de l'opération de soudage.

Selon une réalisation, l'interconnecteur présente une forme annulaire.

Selon une réalisation, le bobinage forme deux chignons, l'interconnecteur s'étendant entre le chignon et le palier.

Selon une réalisation, la machine électrique tournante comporte des premiers moyens d'indexage pour indexer l'interconnecteur par rapport au palier.

Selon une réalisation, les premiers moyens d'indexage comportent des pions appartenant à un des éléments parmi l'interconnecteur et le palier et des trous de forme correspondante appartenant à l'autre des éléments parmi l'interconnecteur et le palier.

Les pions pourront venir de matière ou être rapportés par rapport à l'élément correspondant. Dans le cas où ils sont rapportés, les pions pourront par exemple être emmanchés en force dans un trou correspondant, ou fixés par exemple par soudage ou collage sur la face de l'élément correspondant.

Selon une réalisation, la machine électrique tournante comporte des deuxièmes moyens d'indexage pour indexer le module électrique de commande par rapport au palier.

Selon une réalisation, le module électrique de commande comporte un dissipateur thermique, les deuxièmes moyens d'indexage assurant un indexage dudit dissipateur thermique par rapport au palier.

Selon une réalisation, les deuxièmes moyens d'indexage comportent des pions appartenant à un des éléments parmi le dissipateur thermique du module électrique de commande et le palier et des trous de forme correspondante appartenant à l'autre des éléments parmi le dissipateur thermique et le palier.

Les pions pourront venir de matière ou être rapportés par rapport à l'élément correspondant. Dans le cas où ils sont rapportés, les pions pourront par exemple être emmanchés en force dans un trou correspondant, ou fixés par exemple par soudage ou collage sur la face de l'élément correspondant.

Selon une réalisation, l'interconnecteur est positionné à distance du corps de stator. Cela permet de limiter l'échauffement de l'interconnecteur.

Selon un autre aspect, l'invention a pour objet un ensemble comportant une machine électrique tournante telle que précédemment définie et une boîte de vitesses coopérant avec ladite machine électrique tournante.

Selon une réalisation, la boîte de vitesses comporte un manchon annulaire ayant une denture hélicoïdale ménagée dans sa périphérie externe, et des cannelures ménagées dans sa périphérie interne aptes à coopérer avec des cannelures de forme correspondante ménagées sur l'extrémité de l'arbre de rotor de la machine électrique tournante.

Il sera possible d'adapter l'interface de liaison mécanique de la machine électrique avec un élément extérieur (pignon ou courroie) en adaptant le type de manchon coopérant avec l'extrémité cannelée de l'arbre. En effet, ce manchon pourra comporter en périphérie externe des dentures pour engrènement avec un pignon ou une poulie pour coopération avec une courroie correspondante. Le choix de la configuration du manchon dépend de l'application et en particulier de la configuration de l'élément hôte.

Selon une réalisation, le bobinage du stator est de type double triphasé.

Selon une réalisation, le bobinage du stator est un bobinage à épingle.

Selon une réalisation, des barres de neutre assurent une liaison entre les points neutre des différents enroulements de phase.

Selon une réalisation, les enroulements de phase comporte chacun une première extrémité reliée au point neutre et une deuxième extrémité, dite sortie de phase reliée à une borne de l'interconnecteur.

Selon une réalisation, l'interconnecteur comporte des traces surmoulées reliant électriquement les bornes et les terminaux.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'une machine électrique tournante selon la présente invention;
La figure 2 est une vue en coupe longitudinale de la machine électrique tournante selon l'invention accouplée avec un réducteur de vitesse;
La figure 3 est une vue détaillé de la partie avant de la machine électrique accouplée avec le réducteur de boîte de vitesses;
La figure 4 est une vue illustrant le montage du roulement avant de la machine électrique tournante selon la présente invention;
Les figures 5a et 5b sont des vues partielle illustrant les étapes de montage du roulement avant de la machine électrique tournante selon l'invention;
La figure 6 est une vue en perspective montrant le stator et l'interconnecteur de la machine électrique tournante selon l'invention;
La figure 7 est une vue en perspective illustrant le montage de l'interconnecteur sur le palier arrière de la machine électrique tournante selon la présente invention;
La figure 8 est une vue en perspective de la partie arrière de la machine électrique tournante selon la présente invention;
La figure 9 est une vue en coupe longitudinale de la partie arrière de la machine électrique tournante selon la présente invention.

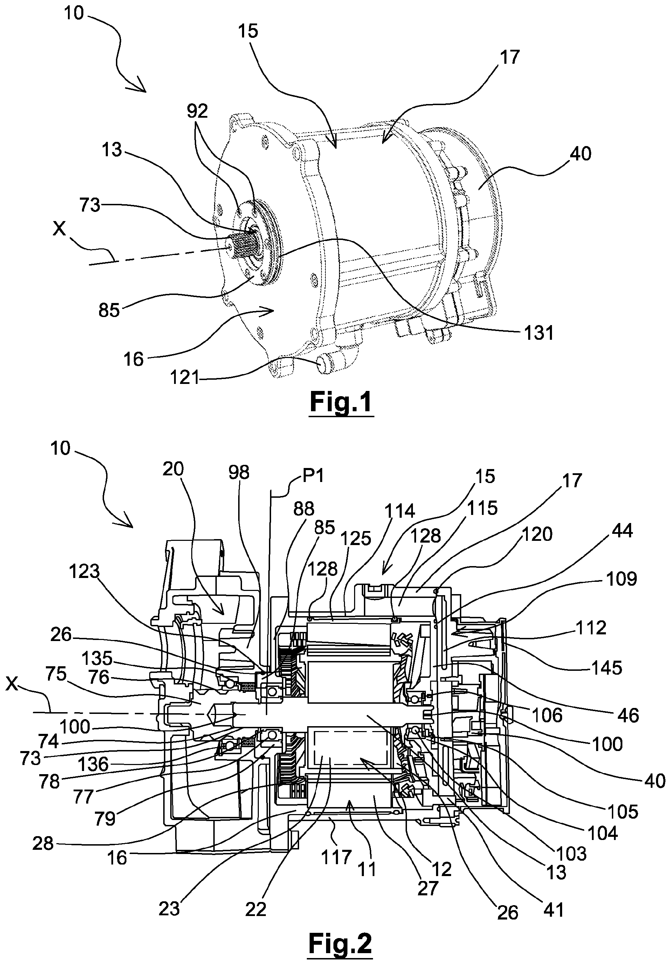

Les éléments identiques, similaires, ou analogues, conservent la même référence d'une figure à l'autre. Dans la suite de la description, l'orientation d'avant en arrière de la machine électrique correspond à une orientation allant de gauche à droite sur la figure 2. Ainsi, on entend par un élément "avant", un élément situé du côté de l'extrémité cannelée 73 de l'arbre de la machine et par élément "arrière" un élément situé du côté opposé, c'est-à-dire du côté du module électrique de commande 40.

Les figures 1 et 2 montrent une machine électrique tournante 10 comportant un stator 11 polyphasé entourant un rotor 12 monté sur un arbre 13 d'axe X correspondant à l'axe de la machine électrique. Le stator 11 entoure le rotor 12 avec présence d'un entrefer entre la périphérie interne du stator 11 et la périphérie externe du rotor 12. Le stator 11 est monté dans un carter 15 muni d'un palier avant 16 et d'un palier arrière 17.

Cette machine électrique 10 est destinée à être accouplée à un réducteur 20 de boîte de vitesses visible en figure 2. La machine est apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La puissance de la machine pourra par exemple être comprise entre 15kW et 50kW.

Plus précisément, le rotor 12 comporte un corps 22 sous la forme d'un paquet de tôles. Des aimants permanents 23 sont implantés dans des cavités du corps 22. Les aimants 23 pourront être en terre rare ou en ferrite selon les applications et la puissance recherchée de la machine. En outre, le rotor 12 comporte deux flasques 26 plaqués chacun contre une face d'extrémité axiale du rotor 12. Ces flasques 26 assurent une retenue axiale des aimants 23 et servent également à équilibrer le rotor 12.

Par ailleurs, le stator 11 comporte un corps 27 constitué par un paquet de tôles ainsi qu'un bobinage 28. Le corps 27 est formé par un empilement de feuilles de tôles maintenues sous forme de paquet au moyen d'un système de fixation adapté.

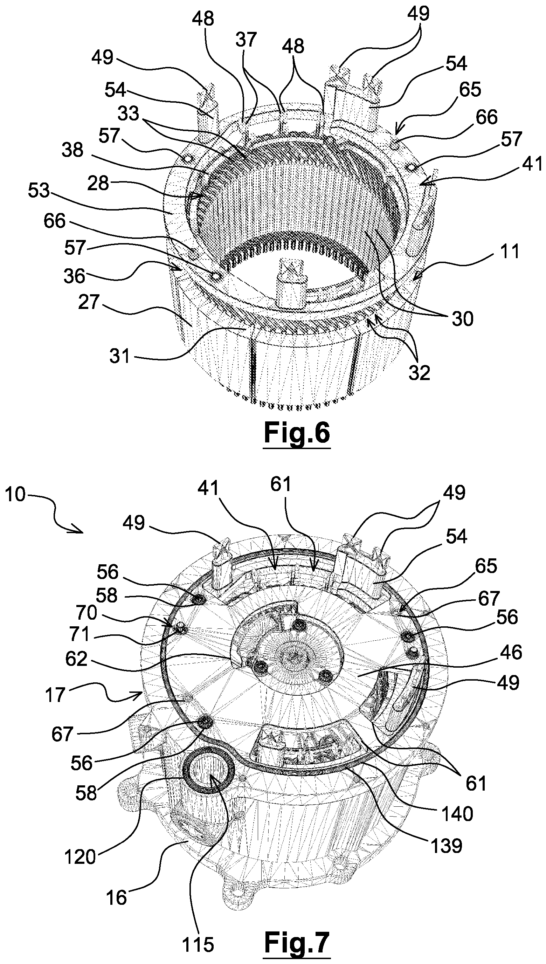

Le corps de stator 27 montré sur la figure 6 est muni de dents 30 s'étendant depuis une périphérie interne d'une culasse annulaire 31 et délimitant deux à deux des encoches 32 pour le montage du bobinage 28 du stator 11. Ainsi, deux encoches 32 successives sont séparées par une dent 30. Les encoches 32 débouchent axialement dans les faces d'extrémité axiale et radialement vers l'intérieur du corps de stator 27.

Le bobinage 28 comporte un ensemble d'enroulements de phase 33 traversant les encoches 32 et formant des chignons 36 s'étendant en saillie de part et d'autre du corps de stator 27. Les enroulements de phase 33 sont obtenus ici à partir d'éléments conducteurs en forme d'épingles reliés entre eux par exemple par soudage. Ces enroulements 33 sont par exemple des enroulements doubles triphasés connectés en étoile.

A cette fin, une extrémité des enroulements de phase 33 est reliée au point neutre au moyen de barres de neutre 38 assurant une liaison entre les points neutre des différents enroulements de phase 33. Les autres extrémités 37 de ces enroulements 33, dites sorties de phase, sont destinées à être reliées à un module électrique de commande 40 via un interconnecteur 41.

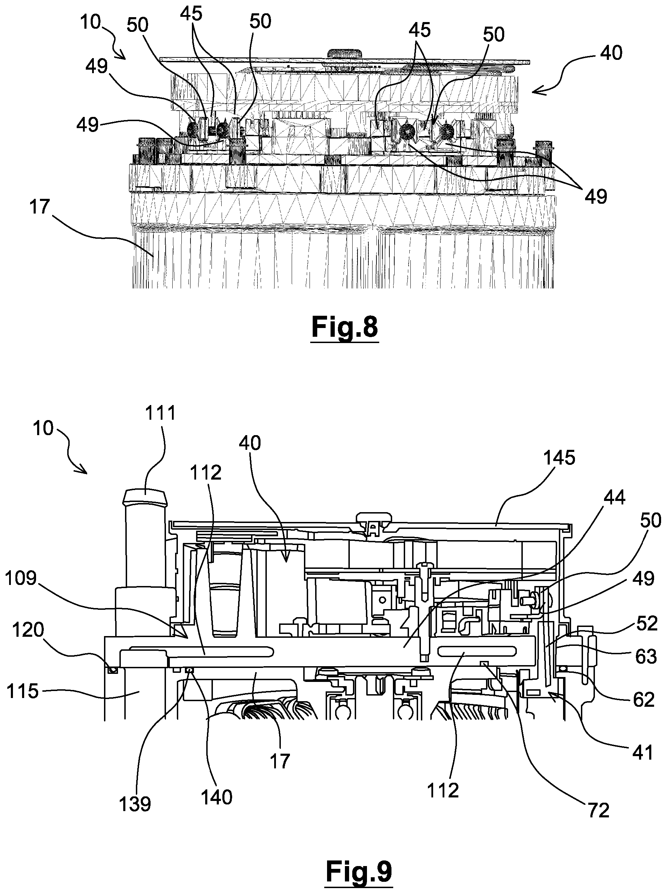

Comme on peut le voir sur la figure 9, le module électrique de commande 40 comporte un dissipateur thermique 44 sur lequel sont fixés notamment des modules de puissance 45, par exemple par vissage. Ces modules de puissance 45 intègrent de façon connue en soi des interrupteurs, prenant par exemple la forme de transistors de type MOS, permettant d'assurer une commande de la machine électrique tournante 10 en mode moteur ou en mode alternateur. Le module électrique de commande 40 est monté plaqué, via le dissipateur thermique 44, contre la face arrière de la paroi transversale 46 du palier arrière 17.

A cet effet, comme montré sur la figure 6, l'interconnecteur 41, ici de forme globalement annulaire, comporte des bornes 48 destinées à être reliées aux sorties de phase 37 et des terminaux de connexion 49 destinés à être connectés électriquement à des pattes 50 des modules de puissance 45. L'interconnecteur 41 permet ainsi d'établir une correspondance entre les sorties de phase 37 et les pattes 50 des modules de puissance 45 qui sont décalées angulairement par rapport aux sorties de phase 37.

A cet effet, les bornes 48 sont reliées électriquement aux terminaux de connexion 49 via des traces 52 (cf. figure 9) sur lesquelles est surmoulé un corps 53 réalisé dans un matériau isolant, tel que du plastique. Les parties surmoulées 54 desquelles sont issues les terminaux de connexion 49 s'étendent en saillie axiale par rapport la portion annulaire de l'interconnecteur 41. L'interconnecteur 41, en particulier sa portion annulaire, s'étend entre le chignon 36 et le palier arrière 17.

Comme cela est bien visible sur la figure 7, l'interconnecteur 41 est fixé à la face avant de la paroi transversale 46 du palier arrière 17 dirigée vers l'intérieur de la machine 10. La fixation de l'interconnecteur 41 pourra être réalisée au moyen d'organes de fixation 56, par exemple des vis. A cette fin, des extrémités filetées des vis 56, qui passent à travers des trous réalisés dans le palier arrière 17, sont destinées à coopérer avec des inserts 57 taraudés de forme correspondante implantés dans le corps de l'interconnecteur 41, tel que montré sur la figure 6.

Les têtes de vis sont disposées du côté de la face arrière de la paroi transversale 46 du palier arrière 17 tournée vers le module électrique de commande 40. Il sera possible de prévoir des creusures 58 dans la paroi transversale 46 du palier 17 afin de recevoir les têtes de vis (cf. figure 7). L'interconnecteur 41 est ainsi positionné à distance du corps de stator 11, ce qui limite grandement son échauffement.

Par ailleurs, afin de permettre le positionnement des terminaux 49 de l'interconnecteur 41 en face des pattes 50 des modules de puissance 45, le palier arrière 17 comporte des ouvertures 61 ménagées dans sa paroi transversale 46 pour le passage des terminaux de connexion 49. Ces ouvertures 61, qui s'étendent circonférentiellement dans la paroi 46, sont distinctes de l'ouverture centrale 62 autorisant le passage de l'arbre 13 et sont positionnées en regard d'ouvertures 63 correspondantes ménagées dans le dissipateur thermique 44 du module électrique de commande 40, tel que cela est montré en figure 9.

Les ouvertures 61, 63 du palier 17 et du dissipateur thermique 44 présentent un dégagement permettant le passage d'un outil de soudage pour assurer la liaison électrique entre les sorties de phase 37 et les bornes 48 correspondantes de l'interconnecteur 41.

En outre, comme on peut le voir sur les figures 6 et 7, des premiers moyens l'indexage 65 permettent d'indexer l'interconnecteur 41 par rapport au palier arrière 17. A cet effet, des pions 66 appartenant à l'interconnecteur 41 sont destinés à pénétrer dans des trous 67 de forme correspondante ménagés dans la paroi transversale 46 du palier arrière 17. On garantit ainsi la mise en coïncidence des trous du palier arrière 17 recevant les vis 56 et des inserts 57 de l'interconnecteur 41 pour sa fixation.

De préférence, les pions 66 viennent de matière avec le corps 53 de l'interconnecteur 41 en étant moulé avec le corps 53 de l'interconnecteur 41. En variante, les pions 66 sont rapportés par rapport au corps 53 et fixés sur le corps 53. En variante, la structure pourra être inversée, c'est-à-dire que les pions 66 sont portés par le palier arrière 17 tandis que les trous 67 correspondants sont ménagés dans l'interconnecteur 41.

En outre, des deuxièmes moyens d'indexage 70 permettent d'indexer le module électrique de commande 40 par rapport au palier arrière 17. A cet effet, des pions 71 appartenant au palier arrière 17 sont destinés à pénétrer dans des trous 72 de forme correspondante réalisés dans le dissipateur thermique 44 du module électrique de commande 40, tel que montré en figure 9.

Les pions 71 pourront venir de matière en étant usinés ou moulés avec le palier arrière 17. En variante, les pions 71 sont rapportés par rapport au palier arrière 17. Dans le cas où ils sont rapportés, les pions 71 pourront par exemple être emmanchés en force dans un trou correspondant, ou fixés par exemple par soudage ou collage sur la paroi transversale 46 du palier arrière 17. En variante, la structure pourra être inversée, c'est-à-dire que les pions 71 sont portés par le dissipateur thermique 44 tandis que les trous 72 correspondants sont ménagés dans le palier arrière 17.

Comme on peut le voir sur la figure 2, la machine électrique 10 est configurée, de sorte qu'une extrémité cannelée 73 de l'arbre 13 viennent en prise avec une périphérie interne cannelée 74 de forme correspondante d'un manchon 75. Cela permet ainsi de lier en rotation l'arbre 13 avec le manchon 75. Le manchon 75 pourra également comporter une denture hélicoïdale 76 ménagée dans sa périphérie externe destinée à coopérer avec les dents d'un pignon correspondant du réducteur 20.

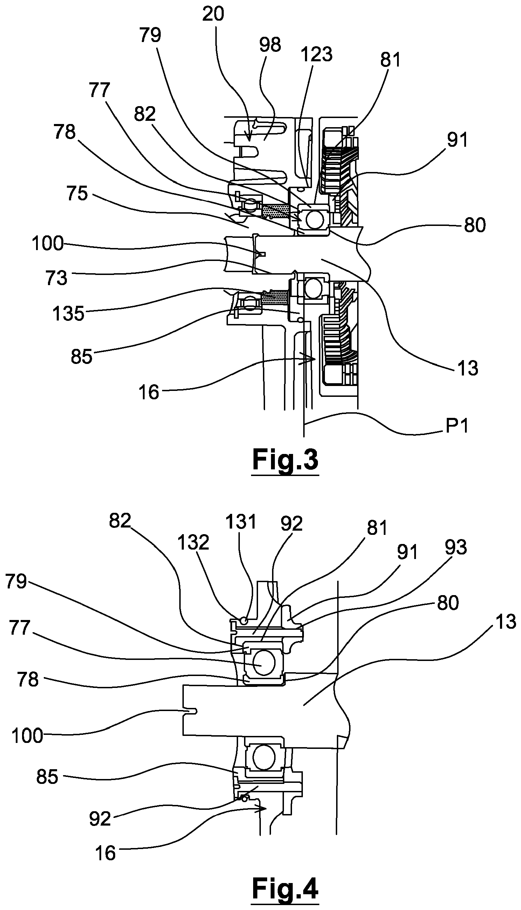

Afin d'assurer un montage à rotation de l'arbre 13 par rapport au palier avant 16, un roulement 77 est intercalé entre l'arbre 13 et le palier avant 16. Le roulement 77 pourra être par exemple un roulement à billes ou à aiguilles. Plus précisément, comme on peut le voir sur les figures 3 et 4, la bague interne 78 du roulement 77 est montée serrée autour de l'arbre 13. A cet effet, la périphérie externe de l'arbre 13 est montée par emmanchement à force à l'intérieur de la périphérie interne de la bague interne 78. La bague interne 78 du roulement 77 vient en appui contre une butée 80 de l'arbre 13 par sa face latérale dirigée vers l'intérieur de la machine 10. La butée 80 est définie par la face d'un tronçon de plus grand diamètre de l'arbre 13.

Par ailleurs, la bague externe 79 est montée avec un jeu entre sa périphérie externe et une portée 81 du palier avant 16 correspondante. Autrement dit, la bague externe 79 est ainsi montée glissante par rapport à la portée 81 du palier.

La portée 81 présente une forme annulaire d'orientation axiale. La portée 81 est délimitée axialement du côté de son extrémité avant par une butée 82. La portée 81 est réalisée au moins en partie dans un nez 85 de la machine constituée par une paroi annulaire formant une saillie axiale par rapport à la paroi transversale 88 du palier avant 16. Ainsi, au moins un plan orthogonal P1 à l'axe X de la machine coupe le nez 85 et le roulement 77. La butée axiale 82 est définie par un changement de diamètre dans la périphérie interne du nez 85. La portée 81 est formée également par une périphérie interne d'une paroi annulaire s'étendant vers l'intérieur de la machine, c'est-à-dire dans une direction opposée au nez 85.

La bague externe 79 est montée en appui d'une part contre la butée axiale 82 et d'autre part contre un organe de maintien 91 fixé au palier avant 16. Ainsi, la bague externe 79 du roulement 77 vient en appui contre la butée axiale 82 par une de ses faces latérales et contre l'organe de maintien 91 par l'autre de ses faces latérales. La bague externe 79 est ainsi maintenue enserrée entre ces deux éléments.

L'organe de maintien 91 est disposé à l'intérieur de la machine électrique, c'est à dire dans le volume interne défini par les paliers avant 16 et arrière 17, de sorte à être en contact avec le roulement 77 uniquement via la bague externe 79.

En l'occurrence, l'organe de maintien 91 est une plaquette présentant une forme annulaire d'orientation radiale. La plaquette 91 est disposée co-axialement par rapport à l'arbre 13, un espace annulaire existant entre une périphérie externe de l'arbre 13 et une périphérie interne de la plaquette 91.

La plaquette 91 est fixée au palier avant 16 au moyen d'organes de fixation 92, en l'occurrence des vis. En variante, on pourra utiliser des boulons ou tout autre moyen de fixation adapté. A cet effet, la plaquette 91 comporte des trous 93 espacés angulairement de manière régulière et destinés à recevoir une extrémité d'une vis 92 ayant traversé une ouverture axiale correspondante réalisée dans la paroi annulaire du nez 85.

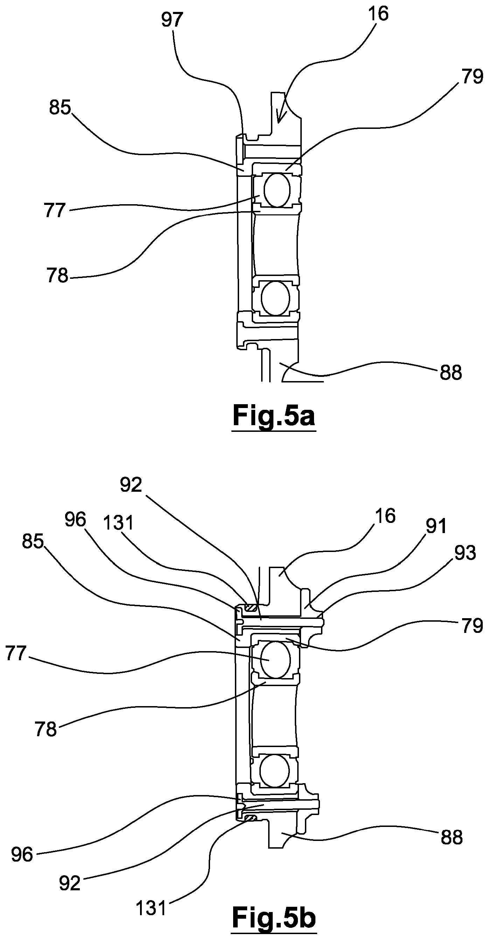

Comme cela est visible en figure 1 et 5b, les têtes de vis 96 sont disposées à l'extérieur de la machine électrique tournante 10. Des logements 97 réalisés dans la face d'extrémité axiale du nez 85 sont destinés à recevoir les têtes de vis 96. Cela permet de réduire l'encombrement de l'ensemble et de définir une face plane du palier de la machine destinée à venir en appui contre une face plane correspondante du carter 98 du réducteur 20, tel que montré en figure 2.

On décrit ci-après les différentes étapes de montage du roulement 77. Dans une première étape illustrée par la figure 5a, le roulement 77 est monté glissant dans le palier avant 16 par le coté intérieur de la machine. Comme cela est illustré par la figure 5b, on positionne ensuite la plaquette 91 du roulement 77 à l'intérieur de la machine électrique 10, ladite plaquette 91 étant vissée via l'extérieur de la machine. Ensuite, le rotor 12 monté sur l'arbre 13 est inséré à l'intérieur de la machine électrique 10 à l'aide d'un système muni de contre pointes destinées à s'insérer dans des alésages de réception 100 correspondant réalisés dans les extrémités axiales de l'arbre 13 pour guider l'arbre 13 dans le roulement 77. L'arbre 13 est mis en place de manière à être emmanché à force dans la périphérie interne de la bague interne 78 (cf. figure 4). L'ensemble est ensuite coiffé par le palier arrière 17.

Pour le démontage de l'arbre 13, il suffit de retirer les vis 92 à l'avant du palier avant 16, en sorte que la plaquette 91 va tomber sur l'arbre 13. Comme le roulement 77 est monté glissant dans la portée 81 du palier avant 16, l'arbre 13 et le rotor 12 pourront s'extraire facilement.

Pour le remontage, il est nécessaire d'arracher le roulement 77 de l'arbre 13 et de recommencer le processus de montage depuis le début.

Par ailleurs, comme cela est illustré par la figure 2, le roulement arrière 103 est monté dans un logement 104 correspondant du palier arrière 17. Une capsule 105 réalisée dans un matériau plastique pourra être interposée radialement entre la bague externe du roulement arrière 103 et une portée délimitant l'ouverture centrale pour le passage de l'arbre 13. Une face latérale arrière du roulement 103 vient en appui contre une butée axiale 106 issue d'une périphérie interne du palier arrière 17.

Avantageusement, la machine électrique 10 est refroidie au moyen d'un circuit de refroidissement 109 permettant l'écoulement d'un liquide de refroidissement, en l'occurrence de l'eau, à l'intérieur de la machine.

Ce circuit 109 comporte une entrée 111 ménagée dans le dissipateur thermique 44 intégrant une chambre interne 112 pour la circulation d'un liquide de refroidissement pour le refroidissement du module électrique de commande 40. La chambre 112 est intégrée dans le dissipateur thermique 44, c'est-à-dire que la chambre 112 pourra être réalisée lors du moulage ou de l'usinage du dissipateur thermique 44 pour définir un volume creux à l'intérieur du dissipateur thermique 44. La chambre 112 est ainsi délimitée par des faces internes du dissipateur 44. Une fois que le liquide de refroidissement a circulé dans la chambre 112 du dissipateur thermique 44, le liquide s'écoule vers une chambre 114 délimitée par les paliers avant 16 et arrière 17.

A cet effet, le liquide de refroidissement passe par un canal 115 débouchant d'une part dans la chambre 114 définie par les paliers avant 16 et arrière 17 et d'autre part dans la chambre 112 du dissipateur 44 au niveau de la face arrière de la paroi transversale 46 du palier arrière 17 en contact avec le dissipateur thermique 44. Le canal 115 est réalisé dans une paroi latérale 117 du palier arrière 17, c'est-à-dire que les parois délimitant le canal 115 sont monobloc avec la paroi latérale 117 du palier arrière 17. Le canal 115 pourra par exemple être obtenu par moulage ou par usinage de la paroi latérale 117 du palier arrière 17.

Un joint 120 visible en figure 2 et 7 est disposé entre le palier arrière 17 et le dissipateur thermique 44 autour du canal 115, entre la sortie d'eau de la chambre interne 112 du dissipateur 44 et l'entrée d'eau du canal 115. Cela permet d'assurer une étanchéité de la machine électrique 10 vis-à-vis du liquide de refroidissement.

Après avoir circulé dans la chambre 114 qui s'étend autour du stator 11 pour assurer son refroidissement sur environ 360 degrés, le liquide est évacué via une sortie de liquide 121 visible sur la figure 1.

Plus précisément, le palier avant 16 comporte la paroi transversale 88 munie en son centre d'une ouverture délimitée par la portée 81 destinée à recevoir le roulement avant 77. La paroi transversale 88 comporte le nez 85 saillant destiné à s'insérer dans un logement 123 correspondant du carter 98 du réducteur 20 de boîte de vitesses. Ce nez 85 s'étend dans une direction opposée à celle dans laquelle s'étend une paroi latérale 125. Cette paroi latérale 125 issue de la périphérie externe de la paroi transversale 88 présente une forme annulaire d'orientation axiale.

Le palier arrière 17 comporte une paroi transversale 46 munie en son centre de l'ouverture 62 comportant la portée destinée à recevoir le roulement arrière 103. La face avant de la paroi transversale 46 comporte les moyens d'indexage 65 (pions ou trous) pour assurer un positionnement sous contrôle de l'interconnecteur 41, comme cela a été décrit précédemment. La face arrière de la paroi transversale 46 comporte les moyens d'indexage 70 (pions ou trous) pour assurer un positionnement sous contrôle du module électrique de commande 40, comme cela a été décrit précédemment. Le palier arrière 17 comporte également une paroi latérale 117 issue de la périphérie externe de la paroi transversale 46. La paroi latérale 117 présente une forme annulaire d'orientation axiale.

Les parois latérales 117, 125 sont dirigées axialement l'une vers l'autre et s'imbriquent l'une dans l'autre, de telle façon que la périphérie externe de la paroi latérale 125 du palier avant 16 et la périphérie interne de la paroi latérale 117 du palier arrière 17 délimitent la chambre de refroidissement 114. Cette chambre de refroidissement 114 est fermée à ses extrémités axiales par deux joints 128 de type torique.

Le stator 11 est monté fretté à l'intérieur du palier avant 16 de manière à établir un contact intime entre la périphérie externe du corps de stator 11 et la périphérie interne de la paroi latérale du palier avant 16.

L'arbre 13 est plein ou pourra comporter des canaux de circulation d'un liquide de refroidissement débouchant vers l'intérieur de la machine électrique.

Par ailleurs, afin d'empêcher le passage de particules polluantes issues de l'extérieur de la machine électrique tournante 10 vers l'intérieur du module électrique de commande 40, un joint 131 visible notamment en figure 1 et 2 est porté par une périphérie externe du nez 85 pour empêcher des particules ou du liquide de pénétrer dans la machine via le roulement 77. Ce joint 131 est radialement disposé entre la périphérie externe du nez 85 et la périphérie interne du logement 123 correspondant ménagé dans le carter 98 du réducteur 20. Ce joint 131 pourra être disposé dans une gorge annulaire 132 ménagée dans la périphérie externe du nez 85.

Comme cela est montré sur les figures 1 et 3, un joint 135, par exemple de type triple lèvre, pourra également être positionné radialement entre une périphérie externe du manchon 75 et une face du carter 98 délimitant une ouverture pour le passage du manchon 75. Le joint 135 est positionné axialement entre le roulement 136 assurant le guidage en rotation du manchon 75 par rapport au carter 98 du réducteur 20 et le roulement avant 77 de la machine électrique tournante 10.

Un joint 139 est également disposé entre le palier arrière 17 et le dissipateur thermique 44. Plus précisément, ce joint 139 est positionné entre la face arrière du palier arrière 17 et la face avant du dissipateur thermique 44. Le joint 139 est positionné dans une gorge 140 ménagée dans la face arrière du palier arrière 17.

Les joints 131 et 139 sont des joints de type torique par exemple réalisés dans un matériau à base d'élastomère et/ou de caoutchouc et/ou de silicone.

Le module électrique de commande 40 pourra également comporter un capot 145 étanche vis-à-vis de l'extérieur de la machine. Le volume interne du capot pourra être rempli de résine.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante (10), notamment pour véhicule automobile, comportant:
- un palier (17) comportant une paroi transversale (46),
- un stator (11) comportant un corps (27) et un bobinage (28) muni d'une pluralité d'enroulements de phase (33), chaque enroulement de phase (33) comportant des extrémités (37),
- un module électrique de commande (40) de la machine électrique tournante,
- un interconnecteur (41) comportant des bornes (48) destinées à être reliées à des extrémités (37) des enroulements de phase (33) et des terminaux de connexion (49) destinés à être reliés au module électrique de commande (40) de la machine électrique tournante (10),
l'interconnecteur (41) étant en appui contre une face de la paroi transversale (46) du palier (17) dirigée vers l'intérieur de la machine électrique tournante, l'interconnecteur (41) étant fixé à ladite face de la paroi transversale (46) du palier au moyen d'organes de fixation (56),
le palier (17) comportant des ouvertures (61) ménagées dans sa paroi transversale (46) pour le passage des terminaux de connexion (49), **caractérisée en ce que** les ouvertures (61) présentent un dégagement permettant le passage d'un outil de soudage des extrémités d'enroulement (37) sur les bornes (48) de l'interconnecteur (41).

2. Machine électrique tournante selon la revendication 1, **caractérisée en ce que** le module de commande (40) est monté plaqué contre une face de la paroi transversale (46) du palier (17) tournée vers l'extérieur de la machine électrique tournante.

3. Machine électrique tournante selon la revendication 1 ou 2, **caractérisée en ce que** les organes de fixation (56) comportent chacun une tête disposée du côté d'une face de la paroi transversale du palier tournée vers le module électrique de commande (40).

4. Machine électrique tournante selon l'une quelconque des revendications 1 à 3, **caractérisée en ce que** l'interconnecteur (41) comporte des inserts (57) taraudés destinés à recevoir des extrémités filetées des organes de fixation (56).

5. Machine électrique tournante selon l'une quelconque des revendications 1 à 4, **caractérisée en ce que** des terminaux de l'interconnecteur (41) sont vissés sur des pattes (50) de modules de puissance (45) appartenant au module électrique de commande (40).

6. Machine électrique tournante selon l'une quelconque des revendications 1 à 5, **caractérisée en ce que** l'interconnecteur (41) présente une forme annulaire.

7. Machine électrique tournante selon l'une quelconque des revendications 1 à 6, **caractérisée en ce que** le bobinage (28) forme deux chignons (36), l'interconnecteur (41) s'étendant entre le chignon (36) et le palier (17).

8. Machine électrique tournante selon l'une quelconque des revendications 1 à 7, **caractérisée en ce qu'**elle comporte des premiers moyens d'indexage (65) pour indexer l'interconnecteur (41) par rapport au palier (17).

9. Machine électrique tournante selon la revendication 8, **caractérisée en ce que** les premiers moyens d'indexage (65) comportent des pions (66) appartenant à un des éléments parmi l'interconnecteur (41) et le palier (17) et des trous (67) de forme correspondante appartenant à l'autre des éléments parmi l'interconnecteur (41) et le palier (17).

10. Machine électrique tournante selon l'une quelconque des revendications 1 à 9, **caractérisée en ce qu'**elle comporte des deuxièmes moyens d'indexage (70) pour indexer le module électrique de commande (40) par rapport au palier (17).

11. Machine électrique tournante selon la revendication 10, **caractérisée en ce que** le module électrique de commande (40) comporte un dissipateur thermique (44), les deuxièmes moyens d'indexage (70) assurant un indexage dudit dissipateur thermique (44) par rapport au palier (17).

12. Machine électrique tournante selon l'une quelconque des revendications 1 à 11, **caractérisée en ce que** l'interconnecteur (41) est positionné à distance du corps de stator (27).

13. Ensemble comportant une machine électrique tournante (10) telle que définie selon l'une quelconque des revendications précédentes et une boîte de vitesses (20) coopérant avec ladite machine électrique tournante (10).

## Patentansprüche

1. Rotierende elektrische Maschine (10), insbesondere für ein Kraftfahrzeug, die Folgendes umfasst:
- ein Lager (17), das eine Querwand (46) umfasst,
- einen Stator (11), der einen Körper (27) und eine Bewicklung (28), die über eine Vielzahl von Phasenwicklungen (33) verfügt, umfasst, wobei jede Phasenwicklung (33) Enden (37) umfasst,
- ein elektrisches Steuermodul (40) für die rotierende elektrische Maschine,
- ein Verbindungselement (41), das Klemmen (48), die dazu bestimmt sind, mit Enden (37) der Phasenwicklungen (33) verbunden zu werden, und Verbindungsanschlüsse (49), die dazu bestimmt sind, mit dem elektrischen Steuermodul (40) für die rotierende elektrische Maschine (10) verbunden zu werden, umfasst,
wobei das Verbindungselement (41) an einer Fläche der Querwand (46) des Lagers (17), die zur Innenseite der rotierenden elektrischen Maschine gerichtet ist, anliegt, wobei das Verbindungselement (41) mit Hilfe von Befestigungsorganen (56) an der Fläche der Querwand (46) des Lagers befestigt ist,
wobei das Lager (17) Öffnungen (61) umfasst, die für den Durchgang der Verbindungsanschlüsse (49) in seiner Querwand (46) eingebracht sind,
**dadurch gekennzeichnet, dass** die Öffnungen (61) einen Freiraum aufweisen, der den Durchgang eines Werkzeugs zum Schweißen der Wicklungsenden (37) an die Klemmen (48) des Verbindungselements (41) gestattet.

2. Rotierende elektrische Maschine nach Anspruch 1, **dadurch gekennzeichnet, dass** das Steuermodul (40) angelegt an eine Fläche der Querwand (46) des Lagers (17), die zur Außenseite der rotierenden elektrischen Maschine zeigt, montiert ist.

3. Rotierende elektrische Maschine nach Anspruch 1 oder 2, **dadurch gekennzeichnet, dass** die Befestigungsorgane (56) jeweils einen Kopf umfassen, der auf der Seite einer Fläche der Querwand des Lagers angeordnet ist, die zu dem elektrischen Steuermodul (40) zeigt.

4. Rotierende elektrische Maschine nach einem der Ansprüche 1 bis 3, **dadurch gekennzeichnet, dass** das Verbindungselement (41) Gewindeeinsätze (57) umfasst, die dazu bestimmt sind, mit Gewinde versehene Enden der Befestigungsorgane (56) aufzunehmen.

5. Rotierende elektrische Maschine nach einem der Ansprüche 1 bis 4, **dadurch gekennzeichnet, dass** Anschlüsse des Verbindungselements (41) auf Laschen (50) von Leistungsmodulen (45), die zu dem elektrischen Steuermodul (40) gehören, aufgeschraubt sind.

6. Rotierende elektrische Maschine nach einem der Ansprüche 1 bis 5, **dadurch gekennzeichnet, dass** das Verbindungselement (41) eine Ringform aufweist.

7. Rotierende elektrische Maschine nach einem der Ansprüche 1 bis 6, **dadurch gekennzeichnet, dass** die Bewicklung (28) zwei Wicklungsköpfe (36) bildet, wobei sich das Verbindungselement (41) zwischen dem Wicklungskopf (36) und dem Lager (17) erstreckt.

8. Rotierende elektrische Maschine nach einem der Ansprüche 1 bis 7, **dadurch gekennzeichnet, dass** sie erste Indexierungsmittel (65) zum Indexieren des Verbindungselements (41) mit Bezug auf das Lager (17) umfasst.

9. Rotierende elektrische Maschine nach Anspruch 8, **dadurch gekennzeichnet, dass** die ersten Indexierungsmittel (65) Stifte (66), die zu einem der Elemente von dem Verbindungselement (41) und dem Lager (17) gehören, und Löcher (67) mit entsprechender Form, die zu dem anderen der Elemente von dem Verbindungselement (41) und dem Lager (17) gehören, umfassen.

10. Rotierende elektrische Maschine nach einem der Ansprüche 1 bis 9, **dadurch gekennzeichnet, dass** sie zweite Indexierungsmittel (70) zum Indexieren des elektrischen Steuermoduls (40) mit Bezug auf das Lager (17) umfasst.

11. Rotierende elektrische Maschine nach Anspruch 10, **dadurch gekennzeichnet, dass** das elektrische Steuermodul (40) einen Wärmeableiter (44) umfasst, wobei die zweiten Indexierungsmittel (70) eine Indexierung des Wärmeableiters (44) mit Bezug auf das Lager (17) sicherstellen.

12. Rotierende elektrische Maschine nach einem der Ansprüche 1 bis 11, **dadurch gekennzeichnet, dass** das Verbindungselement (41) zu dem Körper des Stators (27) beabstandet positioniert ist.

13. Anordnung, die eine rotierende elektrische Maschine (10), wie sie nach einem der vorhergehenden Ansprüche definiert ist, und ein Getriebe (20), das mit der rotierenden elektrischen Maschine (10) zusammenwirkt, umfasst.

## Claims

1. Rotary electric machine (10), in particular for a motor vehicle, having:
- a bearing (17) having a transverse wall (46),
- a stator (11) having a body (27) and a winding (28) provided with a plurality of phase windings (33), each phase winding (33) having ends (37),
- an electrical control module (40) for controlling the rotary electric machine,
- an interconnector (41) having terminals (48) intended to be connected to ends (37) of the phase windings (33) and end connectors (49) intended to be connected to the electrical control module (40) for controlling the rotary electric machine (10),
the interconnector (41) bearing against a face of the transverse wall (46) of the bearing (17) that is directed towards the inside of the rotary electric machine,
the interconnector (41) being fastened to said face of the transverse wall (46) of the bearing by means of fastening members (56),
the bearing (17) having openings (61) provided in its transverse wall (46) for the passage of the end connectors (49),
**characterized in that** the openings (61) have a cutout allowing the passage of a tool for welding the winding ends (37) to the terminals (48) of the interconnector (41) .

2. Rotary electric machine according to Claim 1, **characterized in that** the control module (40) is mounted so as to be pressed against a face of the transverse wall (46) of the bearing (17) that is turned towards the outside of the rotary electric machine.

3. Rotary electric machine according to Claim 1 or 2, **characterized in that** the fastening members (56) each have a head disposed on the side of a face of the transverse wall of the bearing that is turned towards the electrical control module (40).

4. Rotary electric machine according to any one of Claims 1 to 3, **characterized in that** the interconnector (41) has tapped inserts (57) intended to receive threaded ends of the fastening members (56).

5. Rotary electric machine according to any one of Claims 1 to 4, **characterized in that** end connectors of the interconnector (41) are screwed onto tabs (50) of power modules (45) belonging to the electrical control module (40).

6. Rotary electric machine according to any one of Claims 1 to 5, **characterized in that** the interconnector (41) has an annular shape.

7. Rotary electric machine according to any one of Claims 1 to 6, **characterized in that** the winding (28) forms two coil ends (36), the interconnector (41) extending between the visible portion (36) and the bearing (17).

8. Rotary electric machine according to any one of Claims 1 to 7, **characterized in that** it has first indexing means (65) for indexing the interconnector (41) with respect to the bearing (17).

9. Rotary electric machine according to Claim 8, **characterized in that** the first indexing means (65) have pegs (66) belonging to one of the elements out of the interconnector (41) and the bearing (17) and holes (67) of corresponding shape belonging to the other of the elements out of the interconnector (41) and the bearing (17) .

10. Rotary electric machine according to any one of Claims 1 to 9, **characterized in that** it has second indexing means (70) for indexing the electrical control module (40) with respect to the bearing (17).

11. Rotary electric machine according to Claim 10, **characterized in that** the electrical control module (40) has a heat sink (44), the second indexing means (70) indexing said heat sink (44) with respect to the bearing (17) .

12. Rotary electric machine according to any one of Claims 1 to 11, **characterized in that** the interconnector (41) is positioned at a distance from the stator body (27) .

13. Assembly having a rotary electric machine (10) as defined in any one of the preceding claims and a gearbox (20) cooperating with said rotary electric machine (10).
